# EUROPEAN PATENT APPLICATION

(11) **EP 4 431 799 A1**
(43) Date of publication of application: **18.09.2024**
(21) Application number: 24159321.9
(22) Date of filing: 23.02.2024
(51) Int. Cl.: F21V 33/00, G02F 1/1335, G06F 1/16

(54) **SURFACE LIGHT SOURCE DEVICE**

(30) Priority: 09.03.2023 CN 202320434430 U
(71) Applicant: Coretronic Corporation, Hsin-Chu 300 (TW)
(72) Inventor: Yang, Li-Shun, 300 Hsin-Chu (TW); Tsai, Feng-Chuan, 300 Hsin-Chu (TW); Liao, Chi-Sheng, 300 Hsin-Chu (TW)
(74) Representative: Ter Meer Steinmeister & Partner

(57) **Abstract**

A surface light source device includes a surface light source module and an ambient light module. The surface light source module has a light-emitting surface, a back surface opposite to the light-emitting surface, and a side surface connected to the light-emitting surface and the back surface. The ambient light module includes a housing and a light source. The housing is arranged on the back surface and has an opening and a bottom wall opposite to each other. The light source is arranged on the bottom wall and configured to provide a beam emitted from the opening.

## Description

This application claims the priority of China application serial no. 202320434430.9, filed on March 9, 2023.

### BACKGROUND

### Technical FIELD

The present disclosure relates to a light source device, and more particularly to a surface light source device.

### Description of Related Art

Cars are one of the important tools for shopping or commuting in daily life. Additional ambient light that can adjust its colors, brightness, and other visual requirements is recently equipped in cars to enhance the experience of riding in cars or to showcase personal driving characteristics, which has become a trend. However, ambient light may affect drivers' ability to recognize traffic conditions and pose potential risks to traffic safety. In addition, there is also a problem of uneven brightness in the conventional ambient light.

The information disclosed in this Background section is only for enhanced understanding of the background of the disclosure and therefore it may contain information that does not form the prior art that is already known to a person of ordinary skill in the art. Furthermore, the information disclosed in this Background section does not mean that one or more problems to be solved by one or more embodiments of the disclosure were acknowledged by a person of ordinary skill in the art.

### SUMMARY

The present invention is defined in the independent claims. Preferred embodiments are given in the dependent claims.

The present disclosure provides a surface light source device that causes the surface light source module and the ambient light module to have different light-emitting directions. Therefore, when facing the light-emitting surface of the surface light source module, it can avoid directly viewing the beam provided by the ambient light module. Therefore, when the surface light source device is applied to vehicles, it can avoid affecting the driver's ability to recognize road conditions. In addition, the ambient light module can form a relatively uniform beam.

Other advantages and objectives of the disclosure may be further illustrated by the technical features broadly embodied and described as follows.

In order to achieve one or a portion of or all of the objectives or other objectives, the surface light source device provided by the present disclosure includes a surface light source module and an ambient light module. The surface light source module has a light-emitting surface, a back surface opposite to the light-emitting surface, and a side surface connected to the light-emitting surface and the back surface. The ambient light module includes a housing and a light source. The housing is arranged on the back surface and has an opening and a bottom wall opposite to each other. The light source is arranged on the bottom wall and configured to provide a beam emitted from the opening.

In an embodiment of the present disclosure, the ambient light module may further include a diffusion plate arranged at the opening.

In an embodiment of the present disclosure, the housing further may have a first sidewall connected to the bottom wall and the opening.

In an embodiment of the present disclosure, the first sidewall may be parallel to the back surface.

In an embodiment of the present disclosure, the housing further may have a second sidewall extending from the bottom wall along the back surface towards the opening.

The second sidewall may be arranged corresponding to the first sidewall and further extends to cover the side surface so that the opening has a first region and a second region.

The first region may correspond to the bottom wall.

The second region may correspond to the side surface.

The diffusion plate may cover the first region and the second region.

In an embodiment of the present disclosure, the second sidewall may have a first extension portion, a second extension portion, and a third extension portion.

The first extension portion may extends from the bottom wall along the back surface to the side surface.

The second extension portion may be connected to the first extension portion and extends towards the light-emitting surface along the side surface.

The third extension portion may be connected to a side of the second extension portion adjacent to the light-emitting surface and extends towards the opening.

In an embodiment of the present disclosure, the ambient light module may further include a reflector arranged on a surface of the diffusion plate facing the bottom wall.

The reflector may be arranged on a surface of the diffusion plate facing the bottom wall and located in the first region.

In an embodiment of the present disclosure, the housing further may have a fixing portion configured to fix the housing to the back surface of the surface light source module.

In an embodiment of the present disclosure, the fixing portion may include a plurality of lugs.

Each of the lugs may have a fixing hole.

The surface light source device may further include a plurality of fixing members.

The fixing members respectively may pass through the fixing holes of the lugs and are fixed to the back surface.

In an embodiment of the present disclosure, the light source may include a plurality of light-emitting diodes.

In an embodiment of the present disclosure, the aforementioned surface light source module may be a display module.

In an embodiment of the present disclosure, the aforementioned surface light source module may be a backlight module.

In the surface light source device of the present disclosure, the surface light source module and the ambient light module may have different light-emitting directions.

Therefore, when facing the light-emitting surface of the surface light source module, it can avoid directly viewing the beam provided by the ambient light module. Therefore, when the surface light source device is applied to vehicles, it can avoid affecting the driver's ability to recognize road conditions. In addition, the ambient light module can form a relatively uniform beam.

Other objectives, features, and advantages of the disclosure will be further understood from the further technological features disclosed by the embodiments of the disclosure wherein there are shown and described preferred embodiments of the present disclosure, simply by way of illustration of modes best suited to carry out the disclosure.

### BRIEF DESCRIPTION OF THE DRAWINGS

The accompanying drawings are included to provide a further understanding of the disclosure and are incorporated in and constitute a part of this specification. The drawings illustrate embodiments of the disclosure and, together with the description, serve to explain the principles of the disclosure.
FIG. 1 is a schematic back view of a surface light source device in an embodiment of the present disclosure;
FIG. 2 is a schematic partial cross-sectional view of the surface light source device, taken along the line A-A in FIG. 1;
FIG. 3 is a schematic view of a light source arranged on a bottom wall in an embodiment of the present disclosure;
FIG. 4 is a schematic partial cross-sectional view of a surface light source device in another embodiment of the present disclosure; and
FIG. 5 is a schematic partial cross-sectional view of a surface light source device in another embodiment of the present disclosure.

### DESCRIPTION OF EMBODIMENTS

In the following detailed description of the preferred embodiments, reference is made to the accompanying drawings which form a part hereof, and in which is shown by way of illustration specific embodiments in which the disclosure may be practiced. In this regard, directional terminology, such as "top", "bottom", "front", "back", etc., is used with reference to the orientation of the Figure(s) being described. The components of the disclosure can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the disclosure. Also, it is to be understood that the phraseology and terminology used herein are for the purpose of description and should not be regarded as limiting. The use of "including", "comprising", or "having" and variations thereof herein is meant to encompass the items listed thereafter and equivalents thereof as well as additional items. Unless limited otherwise, the terms "connected", "coupled", and "mounted" and variations thereof herein are used broadly and encompass direct and indirect connections, couplings, and mountings. Similarly, the terms "facing", "faces", and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component facing "B" component directly or one or more additional components is between "A" component and "B" component. Also, the description of "A" component "adjacent to" "B" component herein may contain the situations that "A" component is directly "adjacent to" "B" component or one or more additional components is between "A" component and "B" component. Accordingly, the drawings and descriptions will be regarded as illustrative in nature and not as restrictive.

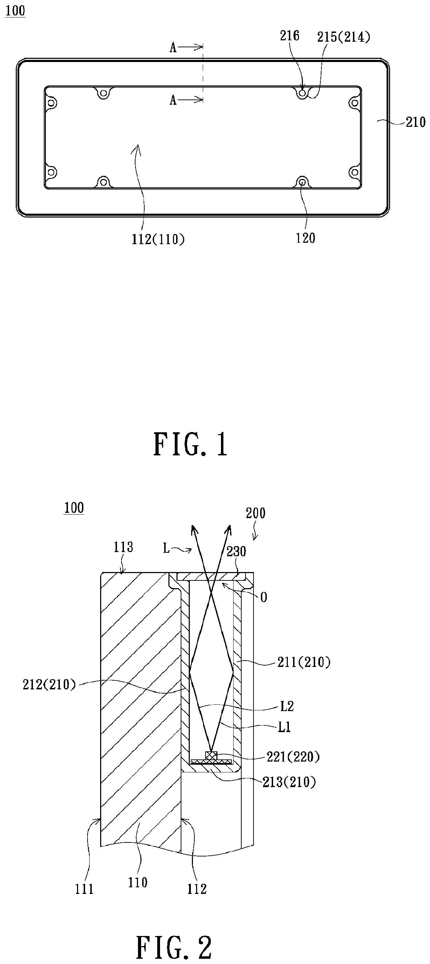

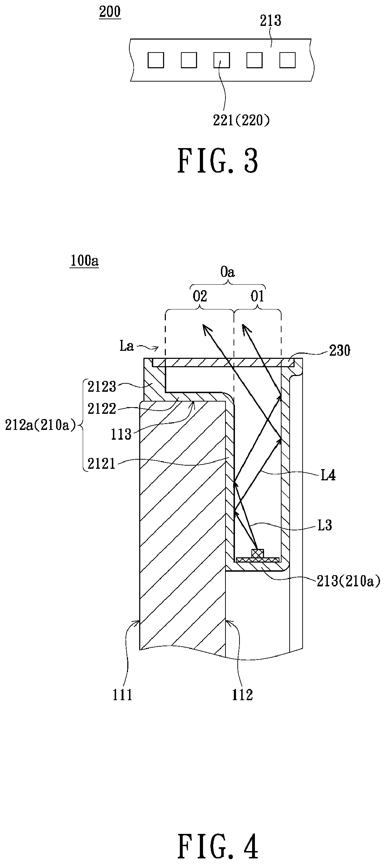

FIG. 1 is a schematic back view of a surface light source device in an embodiment of the present disclosure. FIG. 2 is a schematic partial cross-sectional view of the surface light source device, taken along the line A-A in FIG. 1. FIG. 3 is a schematic view of a light source arranged on a bottom wall in an embodiment of the present disclosure. Please refer to FIGS. 1 to 3. The surface light source device 100 of the present embodiment includes a surface light source module 110 and an ambient light module 200. The surface light source module 110 has a light-emitting surface 111, a back surface 112 opposite to the light-emitting surface 111, and a side surface 113 connected to the light-emitting surface 111 and the back surface 112. The surface light source module 110 can be, for example, a backlight module or a display module. The aforementioned display module can be a self-emitting display module, such as an organic light-emitting diode (OLED) display module, or a combination of a backlight module and a non-self-emitting display panel. The aforementioned non-self-emitting display panel is, for example, a liquid crystal display (LCD), but the present disclosure is not limited to this. The ambient light module 200 includes a housing 210 and a light source 220. The housing 210 is arranged on the back surface 112 and has an opening O and a bottom wall 213 opposite to each other.

Specifically, the housing 210 of the present embodiment has, for example, a first sidewall 211 connected to the bottom wall 213 and the opening O, and may further have, for example, a second sidewall 212 extending from the bottom wall 213 to the opening O along the back surface 112 and arranged corresponding to the first sidewall 211. The first sidewall 211 is, for example, parallel to the back surface 112, that is, the first sidewall 211 and the second sidewall 212 are opposite to each other and both are parallel to the back surface 112. The second sidewall 212 is, for example, connected to the back surface 112. In addition, the ambient light module 200 of the present embodiment, for example, surrounds the back surface 112. In another embodiment, the ambient light module 200 can be arranged on some sides of the back surface 112. The present disclosure does not specifically limit the position and distribution of the ambient light module 200 on the back surface 112.

The light source 220 of the present embodiment is disposed in the housing 210 and is arranged on the bottom wall 213. The light source 220 is configured to provide a beam L to be emitted from the opening O. The light source 220 of the present embodiment includes, for example, a plurality of light-emitting diodes (LEDs) 221 and a circuit board (not shown in FIG. 2 and omitted in FIG. 3). The light-emitting diodes 221 are arranged on the circuit board. Each light-emitting diode 221 is configured to provide light, such as the light L1 and L2. The light L1 and L2 are reflected in the housing 210 and then emitted from the opening O of the housing 210. The light L1 and L2 emitted from the opening O form the aforementioned beam L. Because the light L1 and L2 can mix in the housing 210, the beam L formed by the light L1 and L2 can have a relatively uniform brightness. In the present embodiment, the housing 210 has a cavity formed by the bottom wall 213, the first sidewall 211, and the second sidewall 212 of the housing 210. The opening O of the cavity and the side surface 113 of the surface light source module 110 are located on the same side of the surface light source module 110. In other words, the beam L of the ambient light module 200 can be regarded as emitted from the side surface 113 of the surface light source module 110, that is, the emitting direction of the beam L is different from the emitting direction of the light-emitting surface 111 of the surface light source module 110. The light-emitting diodes 221 of the present embodiment are equidistant arranged on the bottom wall 213, but the present disclosure does not specifically limit the arrangement and quantity of the light-emitting diodes 221. In addition, the present disclosure does not specifically limit the types of light source 220. The light-emitting diode 221 can also be replaced with other types of point light sources. In another embodiment, the light source 220 can be a linear light source, such as a lamp tube; however, the present disclosure is not limited to this. In addition, in order to make the beam L emitted from the ambient light module 200 more uniform, the ambient light module 200 in the present embodiment further includes, for example, a diffusion plate 230 arranged at the opening O. In another embodiment, the diffusion plate 230 can be replaced with other components that can make the beam L uniform.

In the surface light source device 100 of the present embodiment, the ambient light module 200 is arranged on the back surface 112 of the surface light source module 110, and the opening O of the housing 210 and the light-emitting surface 111 of the surface light source module 110 face different sides, thus, the light emitting directions of the surface light source module 110 and the ambient light module 200 are different. As a result, when the surface light source device 100 of the present embodiment is applied to a vehicle (e.g., installed around the driver's seat of a car), the beam L provided by the ambient light module 200 through the opening O is prevented from directly facing the driver, which may affect the driver to view the surface light source module 110 and the ability to recognize the road conditions.

Please refer to FIG. 1. The housing 210 of the present embodiment further has, for example, a fixing portion 214, which fixes the housing 210 to the back surface 112 of the surface light source module 110. The fixing portion 214 includes, for example, a plurality of lugs 215. Each lug 215 has, for example, a fixing hole 216. In addition, the surface light source device 100 includes, for example, a plurality of fixing members 120. The fixing members 120 pass through the fixing holes 216 of the lugs 215 and are fixed to the back surface 112, respectively. For example, the fixing portion 214 of the housing 210 in the present embodiment includes, for example, eight lugs 215. Each lug 215 has a fixing hole 216. The size of the fixing member 120 corresponds to the size of the fixing hole 216 of the lug 215 so that the fixing member 120 can pass through the fixing hole 216 of the respective lug 215 to fix the housing 210 to the back surface 112. The quantity of the fixing members 120 corresponds to the quantity of the fixing holes 216, for example. The fixing member 120 can be a screw, adhesive, or weldable material, therefore allowing the housing 210 and the back surface 112 to be fixed by locking, pasting, or welding. The present disclosure does not specifically limit the fixing means between the housing 210 and the back surface 112, and the quantities and positions of the fixing members 120, the lugs 215, and the fixing holes 216.

FIG. 4 is a schematic partial cross-sectional view of a surface light source device in another embodiment of the present disclosure. Please refer to FIG. 4. The surface light source device 100a of the present embodiment is similar to the surface light source device 100, and the main difference is that the second sidewall 212a of the housing 210a in the present embodiment further extends to cover the side surface 113, so that the opening Oa has, for example, a first region O1 and a second region 02. The first region O1 corresponds to the bottom wall 213, the second region O2 corresponds to the side surface 113, and the diffusion plate 230 covers the first region O1 and the second region O2, for example. Specifically, the second sidewall 212a has, for example, a first extension portion 2121, a second extension portion 2122, and a third extension portion 2123. The first extension portion 2121 extends from the bottom wall 213 along the back surface 112 to the side surface 113, the second extension portion 2122 connects the first extension portion 2121 and extends towards the light-emitting surface 111 along the side surface 113, and the third extension portion 2123 connects the side of the second extension portion 2122 adjacent to the light-emitting surface 111 and extends towards the opening Oa, for example. By extending the second sidewall 212a to cover the side surface 113 so that the opening Oa forms the first region O1 corresponding to the bottom wall 213 and the second region O2 corresponding to the side surface 113, the beam La can not only exit from the first region O1 corresponding to the bottom wall 213 but also from the second region O2 corresponding to the side surface 113. For example, after being reflected in the housing, the light L3 can exit from the first region O1 and the light L4 can exit from the second region O2, for example. The light L3 and L4 emitted from the opening Oa form the aforementioned beam La.

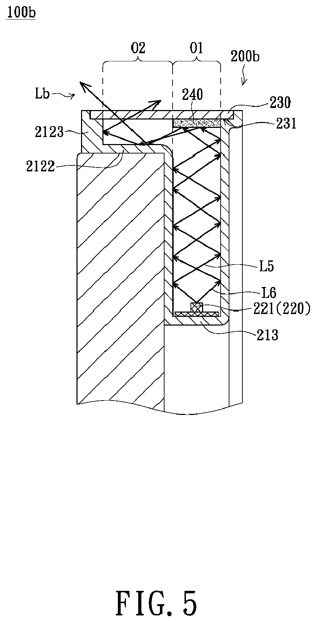

FIG. 5 is a schematic partial cross-sectional view of a surface light source device in another embodiment of the present disclosure. Please refer to FIG. 5. The surface light source device 100b of the present embodiment is similar to the surface light source device 100a, and the main difference is that the ambient light module 200b of the present embodiment further includes, for example, a reflector 240, arranged on the surface 231 of the diffusion plate 230 facing the bottom wall 213 and located in the first region O1. In this way, the beam Lb can only exit from the second region O2. For example, the light L5 and L6 are transmitted in the housing, reflected by the reflector plate 240, and then reflected by the second extension portion 2122 or the third extension portion 2123, causing the light L5 and L6 to exit from the second region O2. The light L5 and L6 emitted from the second region O2 form the aforementioned beam Lb. In addition, because the distance for the light L5 and L6 transmitted to the second region O2 is longer than the distance for the light L3 and light L4 transmitted to the first region O1 and the second region O2 (i.e., the mixing distance is longer), a uniform beam Lb can be provided even if the spacing between light-emitting diodes 221 increases, which is helpful to reduce the quantity of the light-emitting diodes 221 and thereby reducing production costs.

In summary, in the surface light source device of the present disclosure, the ambient light module is arranged on the back surface of the surface light source module, and the opening of the housing and the light-emitting surface face different sides. Thus, the light-emitting directions of the surface light source module and the ambient light module are different. In addition, the light provided by the light source can be reflected and mixed in the housing to form a relatively uniform beam that emits from the opening. Moreover, because the second sidewall of the housing extends to cover the side surface, the beam can emit from the opening corresponding to the side surface. In addition, the surface light source device in the present disclosure has the advantage of reducing the quantity of light sources such as light-emitting diodes.

The foregoing description of the preferred embodiment of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode of practical application, thereby enabling persons skilled in the art to understand the disclosure for various embodiments and with various modifications as are suited to the particular use or implementation contemplated. It is intended that the scope of the disclosure be defined by the claims appended hereto and their equivalents in which all terms are meant in their broadest reasonable sense unless otherwise indicated. Therefore, the term "the disclosure", "the disclosure" or the like is not necessarily limited the claim scope to a specific embodiment, and the reference to particularly preferred exemplary embodiments of the disclosure does not imply a limitation on the disclosure, and no such limitation is to be inferred. The disclosure is limited only by the spirit and scope of the appended claims. Moreover, these claims may refer to the use of "first", "second", etc. followed by nouns or elements. Such terms should be understood as a nomenclature and should not be construed as giving the limitation on the number of the elements modified by such nomenclature unless a specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by persons skilled in the art without departing from the scope of the disclosure as defined by the following claims. Moreover, no element or component in the disclosure is intended to be dedicated to the public regardless of whether the element or component is explicitly recited in the following claims.

## Claims

1. A surface light source device, comprising:
a surface light source module (110), having a light-emitting surface (111), a back surface (112) opposite to the light-emitting surface (111), and a side surface (113) connected to the light-emitting surface (111) and the back surface (112);
an ambient light module (200), comprising:
a housing (210), arranged on the back surface (112) and having an opening (O) and a bottom wall (213) opposite to each other; and
a light source (220), arranged on the bottom wall (213) and configured to provide a beam (L) emitted from the opening (O).

2. The surface light source device according to claim 1, wherein the ambient light module (200) further comprises a diffusion plate (230) arranged at the opening (O).

3. The surface light source device according to claim 1 or 2, wherein the housing (210) further has a first sidewall (211) connected to the bottom wall (213) and the opening (O), and the first sidewall (211) is parallel to the back surface (112).

4. The surface light source device according to claim 3, wherein the housing (210) further has a second sidewall (212) extending from the bottom wall (213) along the back surface (112) towards the opening (O), the second sidewall (212) is arranged corresponding to the first sidewall (211) and further extends to cover the side surface (113).

5. The surface light source device according to claim 4, wherein the opening (O) has a first region (O1) and a second region (O2), the first region (O1) corresponds to the bottom wall (213), the second region (O2) corresponds to the side surface (113), and the diffusion plate (230) covers the first region (O1) and the second region (O2).

6. The surface light source device according to claim 4 or 5, wherein the second sidewall (212) has a first extension portion (2121), a second extension portion (2122), and a third extension portion (2123).

7. The surface light source device according to claim 6, wherein the first extension portion (2121) extends from the bottom wall (213) along the back surface (112) to the side surface (113) and/or the second extension portion (2122) is connected to the first extension portion (2121) and extends towards the light-emitting surface (111) along the side surface (113), and/or the third extension portion (2123) is connected to a side of the second extension portion (2122) adjacent to the light-emitting surface (111) and extends towards the opening (O).

8. The surface light source device according to any one of the preceding claims 2-7, wherein the ambient light module (200) further comprises a reflector (240) arranged on a surface of the diffusion plate (230) facing the bottom wall (213).

9. The surface light source device according to any one of the preceding claims, wherein the housing (210) further has a fixing portion (214) configured to fix the housing (210) to the back surface (112) of the surface light source module (110).

10. The surface light source device according to claim 9, wherein the fixing portion (214) comprises a plurality of lugs (215), each of the lugs (215) has a fixing hole (216).

11. The surface light source device according to claim 10, further comprising a plurality of fixing members (120), and the fixing members (120) respectively pass through the fixing holes (216) of the lugs (215) and are fixed to the back surface (112).

12. The surface light source device according to any one of the preceding claims, wherein the light source (220) comprises a plurality of light-emitting diodes (221).

13. The surface light source device according to any one of the preceding claims, wherein the surface light source module (110) is a display module.

14. The surface light source device according to any one of the preceding claims, wherein the surface light source module (110) is a backlight module.
